# DEMANDE DE BREVET EUROPEEN

(11) **EP 3 023 753 A1**
(43) Date de publication de la demande: **25.05.2016**
(21) Numéro de dépôt: 15195276.9
(22) Date de dépôt: 19.11.2015
(51) Int. Cl.: G01F 11/26, G01F 15/00

(54) **DISPOSITIF AMELIORE DE DOSAGE DE LIQUIDE S'ECOULANT D'UN RECIPIENT ET SYSTEME ASSOCIE**

(30) Priorité: 20.11.2014 FR 1461229
(71) Demandeur: JDC SAS, 33520 Bruges (FR)
(72) Inventeur: MOINEL, Marc, 44470 CARQUEFOU (FR)
(74) Mandataire: Vidon Brevets & Stratégie

(57) **Abrégé**

L'invention concerne un dispositif de dosage d'une quantité de liquide écoulée d'un récipient présentant une ouverture orientée vers le haut lorsque le récipient est posé. Le dispositif est solidarisé à l'ouverture du récipient et comporte un moyen de contrôle de l'écoulement d'une quantité de liquide déterminée lorsque l'ouverture du récipient est orientée vers le bas. Le dispositif comporte un capteur de positionnement détectant le changement de position du récipient et déclenchant l'écoulement de la quantité déterminée de liquide lorsque l'ouverture du récipient est orientée vers le bas. Ainsi, le simple basculement orientant l'ouverture vers le bas déclenche le mécanisme d'ouverture de l'écoulement d'une quantité déterminée de liquide, il n'y a plus besoin d'effectuer une intervention en appuyant sur un bouton commandant l'écoulement. Selon un perfectionnement, le dispositif décompte le temps d'écoulement du liquide pour déterminer la quantité à verser.

## Description

### 1. Domaine de l'invention

Le domaine de l'invention est celui des équipements électroniques de dosage d'un liquide. Plus précisément, l'invention concerne un dispositif de dosage qui déclenche l'écoulement d'une quantité de liquide déterminée lorsque le récipient est basculé et que son ouverture est dirigée vers le bas.

### 2. Art antérieur

De nos jours, les débits de boissons tels que des bars, discothèques, restaurants, sont équipés pour délivrer des quantités déterminées de liquide. Les boissons sont habituellement contenues dans des récipients, l'invention concerne plus particulièrement le cas où le récipient dispose d'une ouverture qu'il suffit d'orienter vers le bas pour déclencher par gravité l'écoulement du liquide. Ce liquide peut être de l'alcool pour apéritif ou digestif, du vin, des sodas, des liqueurs, des cocktails, etc. Le récipient est typiquement une bouteille.

Dans ce type d'établissements, les quantités de liquide sont dosées et le prix de la consommation dépend généralement de la quantité versée. Pour cela, ces établissements sont classiquement équipés d'une pluralité de dispositifs de dosage, généralement disposés en hauteur, et selon lesquels les bouteilles des liquides concernés sont renversées et maintenues chacune sur un dispositif de dosage comprenant un élément pénétrant le goulot de la bouteille et une partie doseuse actionnée en présentant un verre sous la partie doseuse. Le versement du liquide s'effectue de la façon suivante, le verre est présenté sous la bouteille et soulevé de façon que son bord appuie sur un dispositif mécanique libérant le liquide. Lorsque l'opérateur faisant le service des boissons (appelé aussi un « barman ») considère que la quantité est atteinte, il abaisse le verre ce qui arrête l'écoulement et le sert au consommateur. Il est possible de placer un repère visuel sur le flanc du verre pour améliorer la précision mais de tels dispositifs mécaniques sont peu précis, la quantité d'écoulement dépendant de la durée de présentation du verre sous la bouteille.

La demande FR 2 929 262 déposée par la demanderesse décrit un dispositif de dosage comportant une pompe péristaltique qui permet comptabiliser très précisément un nombre de volume élémentaire d'un liquide qui s'écoule d'un récipient, typiquement une bouteille. Cette pompe comporte une pièce rotative portant à sa périphérie des moyens de dosage délimitant deux à deux un volume élémentaire et destinés à entraîner ledit volume élémentaire dudit conduit de soutirage vers ledit conduit de distribution. Des moyens de contrôle du nombre de fractions de tours parcourues par cette pièce rotative permettent de compter le nombre de volumes élémentaires et ainsi d'arrêter l'écoulement lorsque la quantité de liquide souhaitée est atteinte. Une entrée d'air jouxte la sortie d'écoulement du liquide, la pompe est conçue de façon que le volume de liquide extrait soit le même que le volume d'air injecté, de cette façon, la quantité de liquide écoulée est contrôlée très précisément. Lors de la commande, l'opérateur tape sur le clavier d'une caisse enregistreuse une valeur d'une certaine quantité de liquide à verser. Une fois la commande validée, la caisse émet un signal vers la bouteille concernée en spécifiant la quantité. Lorsque la commande est réalisée, la caisse neutralise le dispositif de dosage jusqu'à la prochaine commande.

Le document MILNER - US 2008/195251 décrit un système doté d'une pluralité de verseurs placés sur autant de bouteilles, et commandés à distance par un serveur distant via des stations de base. Ce document enseigne que l'on peut calculer la viscosité d'une liqueur en la faisant s'écouler dans des récipients étalonnés. Ce document enseigne de créer une base de données associant des liquides et leurs viscosités, afin de calculer des temps de remplissage valable pour tous les verseurs. Ce mode opératoire oblige d'utiliser un capteur de viscosité et d'effectuer des calculs complexes, de plus il ne permet pas de s'adapter aux disparités de chaque verseur qui peuvent délivrer des débits différents lorsqu'ils sont complétement ouverts.

Ces systèmes sont bien adaptés à des établissements dans lesquels les bouteilles sont fixées avec l'ouverture vers le bas. Si la bouteille est posée et doit être basculée pour laisser écouler son contenu, le dispositif décrit précédemment ne possède pas cette information. De plus, le précédent système nécessite de nombreuses interventions manuelles au niveau de la caisse enregistreuse.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un dispositif de dosage utilisable pour des récipients posés sur un support et que l'on doit basculer pour en verser le contenu.

Notamment, l'invention a pour objectif, selon au moins un mode de réalisation, de minimiser les commandes destinées à déclencher l'écoulement.

Un autre objectif de l'invention est, selon au moins un mode de réalisation, de fournir un système permettant de comptabiliser les quantités écoulées de divers récipients et de contrôler que ces quantités de liquide correspondent à des commandes.

### 4. Présentation de l'invention

Pour ceci, l'invention propose un dispositif de dosage d'une quantité de liquide écoulée d'un récipient présentant une ouverture orientée vers le haut lorsque le récipient est posé. Le dispositif est solidarisé à ladite ouverture du récipient et comporte un moyen de contrôle de l'écoulement d'une quantité de liquide déterminée lorsque l'ouverture du récipient est orientée vers le bas. Le dispositif comporte en outre un capteur de positionnement détectant le changement de position du récipient et déclenchant l'écoulement de la quantité déterminée de liquide lorsque l'ouverture du récipient est orientée vers le bas.

Ainsi, selon cet aspect de l'invention, le simple mouvement vers le bas du récipient déclenche l'écoulement d'une quantité déterminée de liquide, il n'y a plus besoin d'appuyer sur un bouton.

Selon un premier mode de réalisation, le dispositif de dosage comporte un premier temporisateur, et le moyen de contrôle comporte un moyen de libération de l'écoulement pendant un temps proportionnel à la quantité de liquide déterminée. De cette manière, il suffit de comptabiliser le temps d'écoulement pour verser une quantité précise de liquide.

Selon un autre mode de réalisation, le premier temporisateur comporte une pluralité de durée correspondant chacune à une quantité déterminée de liquide à écouler. De cette manière, il suffit de sélectionner un certain temps d'écoulement parmi plusieurs pour sélectionner une certaine quantité de liquide parmi une liste de quantités.

Selon un autre mode de réalisation, le dispositif de dosage comporte un moyen de communication avec une caisse enregistreuse, ce moyen de communication émet un premier signal lors de chaque changement de position du récipient. De cette manière, une caisse enregistreuse est tout de suite prévenue lorsqu'un récipient est basculé et peut émettre un signal d'alarme si cette opération n'est pas prévue, comme par exemple lorsque l'opérateur ne prend pas la bonne bouteille.

Selon un autre mode de réalisation, le dispositif de dosage comporte un mode d'apprentissage consistant à comptabiliser le temps d'écoulement de liquide s'écoulant dans un contenant représentant une quantité déterminée. Le moyen de contrôle libére l'écoulement pendant le temps ainsi comptabilisé lorsque la quantité déterminée de liquide est demandée. De cette manière, le dispositif peut, de façon autonome, déterminer et enregistrer la durée d'écoulement correspondant à une certaine quantité de liquide à écouler.

Selon un autre mode de réalisation, le dispositif de dosage comporte un moyen de détection de l'arrachement d'un moyen de solidarisation du dispositif sur le récipient, la détection de l'arrachement du moyen déclenchant l'émission d'un signal. De cette manière, si le dispositif est séparé de son récipient, un signal d'alarme est émis et l'opérateur peut en être informé.

Selon un autre mode de réalisation, l'absence de mouvement détecté par le capteur de positionnement pendant une durée déterminée déclenche la mise en mode veille d'au moins le moyen de contrôle. De cette manière et dans le cas où le dispositif embarque sa propre alimentation (pile ou batterie), cette alimentation est économisée.

Selon un autre aspect, l'invention concerne un système de distribution d'une quantité de liquide déterminé extraite à partir d'un récipient présentant une ouverture orientée vers le haut lorsque le récipient est posé. Le système comprend un dispositif solidarisé à ladite ouverture du récipient et une caisse enregistreuse communiquant à travers un réseau avec ledit dispositif et apte à recevoir des commande. Le dispositif comporte au moins un moyen de contrôle de la quantité de liquide déterminé s'écoulant de l'ouverture lorsque celle-ci est orientée vers le bas, un capteur de positionnement détectant le changement de position du récipient et déclenchant l'écoulement de la quantité déterminée de liquide lorsque l'ouverture du récipient est orientée vers le bas, et un moyen de communication émettant une donnée représentative de la durée d'écoulement de liquide. La caisse enregistreuse contrôle que la quantité de liquide correspond à la commande introduite.

De cette manière, les quantités de liquide versées par les différents dispositifs placés dans un débit de boissons sont contrôlées de façon centralisée par la caisse enregistreuse.

Selon un autre mode de réalisation, la caisse enregistreuse comporte un moyen de comptabilisation des quantités de liquide écoulées par un dispositif, un moyen de comparaison du cumul de liquide écoulé avec un seuil correspondant à une partie du volume du récipient associé à ce dispositif, et un moyen d'émission d'une alarme lorsque le cumul est supérieur au seuil. De cette manière, un opérateur présent devant la caisse enregistreuse perçoit un signal sonore ou visuel qui le renseigne que le récipient associé à un doseur est quasi vide. L'opérateur peut ainsi le remplacer par un récipient plein.

Selon un autre mode de réalisation, le moyen de communication du dispositif émet périodiquement un signal de présence vers la caisse enregistreuse, la caisse enregistreuse comprenant un moyen d'émission d'un signal d'alarme lorsque ledit signal de présence n'est plus détecté. De cette manière, une caisse enregistreuse reçoit l'information qu'une bouteille n'est plus dans l'environnement immédiat du local et peut émettre un signal d'alarme pour signaler cela.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un exemple de schéma des principaux appareils et équipements pour la mise en oeuvre de l'invention,
- la figure 2 présente un synoptique des principaux équipements composant un doseur selon un mode préféré de réalisation,
- la figure 3 présente une vue d'une carte électronique d'un doseur,
- les figures 4 présentent des vues en perspective d'un prototype de doseur selon un exemple de réalisation,
- la figure 5 présente un exemple d'apparence d'écran visible sur un serveur local communiquant avec un doseur,
- la figure 6 présente un autre exemple d'apparence d'écran visible sur un serveur local lorsque le doseur reçoit des commandes de ce serveur.

### 6. Description de modes de réalisation particuliers

### 6.1 Principe général

L'invention concerne donc un dispositif de dosage d'une quantité de liquide écoulée d'un récipient présentant une ouverture orientée vers le haut lorsque le récipient est posé. Le dispositif est solidarisé à l'ouverture du récipient et comporte un moyen de contrôle de l'écoulement d'une quantité de liquide déterminée lorsque l'ouverture du récipient est orientée vers le bas. Le dispositif comporte un capteur de positionnement détectant le changement de position du récipient et déclenchant l'écoulement de la quantité déterminée de liquide lorsque l'ouverture du récipient est orientée vers le bas. Ainsi, le simple basculement orientant l'ouverture vers le bas déclenche le mécanisme d'ouverture de l'écoulement d'une quantité déterminée de liquide, il n'y a plus besoin d'effectuer une intervention en appuyant sur un bouton commandant l'écoulement.

Selon un perfectionnement, le dispositif décompte le temps d'écoulement du liquide pour déterminer la quantité à verser.

### 6.2 Description d'un mode de réalisation

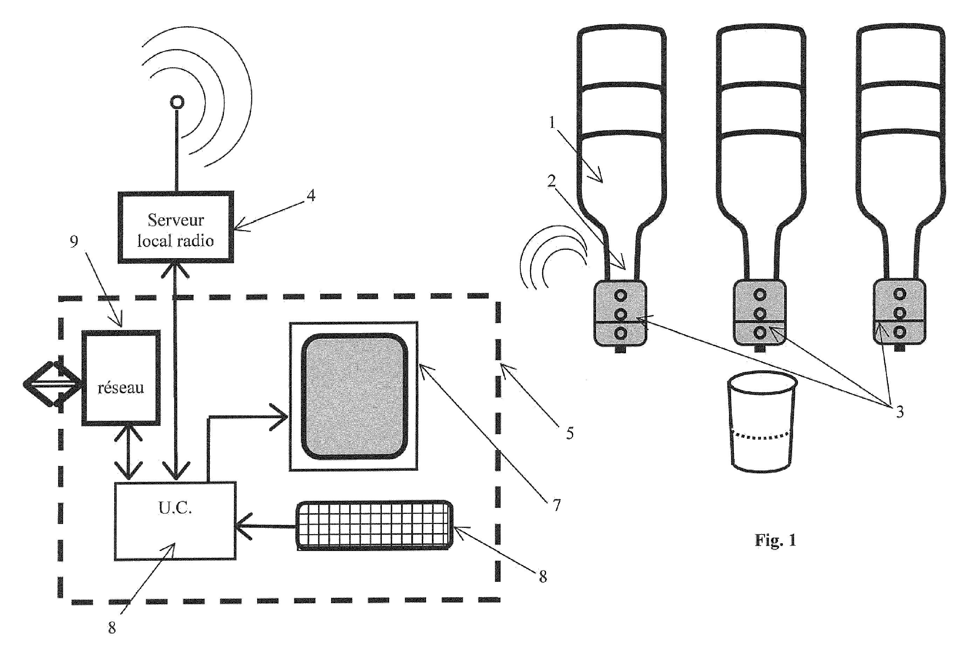

La **Fig. 1** présente les principaux éléments d'un système de distribution de boisson selon un exemple de réalisation de l'invention. Des récipients 1, typiquement des bouteilles, sont placés sur un support, tel qu'une étagère ou un bar d'un débit de boissons ou d'une discothèque. Les bouteilles sont posées sur le culot avec l'ouverture 2, en l'occurrence le goulot, orienté vers le haut. Un doseur 3 est fixé sur le goulot de chaque bouteille, le doseur commande l'écoulement de la bouteille lorsque le goulot est orienté vers le bas, le liquide s'écoulant par gravité. Le doseur comprend une carte électronique et un servo moteur dont la rotation anime des pièces contrôlant l'écoulement du liquide. Ce liquide peut être de l'alcool pour apéritif ou digestif, du vin, des sodas, des liqueurs, des cocktails, etc.

Par ailleurs, le doseur 3 communique par radio avec un serveur local 4, ce serveur est relié à un terminal dédié 5, une caisse enregistreuse ou un terminal point de vente par exemple. Le serveur local gère les communications radio entre les différents doseurs 3 et le terminal dédié 5. Selon un mode préféré de réalisation, le serveur local 4 ne possède pas d'interface utilisateur, l'opérateur faisant le service des boissons (appelé aussi un « barman ») communique avec le système par le terminal dédié 5. Ce terminal dispose typiquement d'un clavier 6 et d'un écran 7 sous la gestion d'une unité centrale 8. Selon une variante de réalisation, l'écran est tactile, l'opérateur appuie sur l'écran au niveau d'icônes pour introduire des commandes. Ce terminal dispose éventuellement d'une interface avec un réseau informatique, utilisé notamment pour le paiement des transactions. Le serveur 4 possède un module de communication à faible portée.

Selon un autre mode de réalisation, le serveur local 4 et le terminal dédié constitue un seul et unique appareil.

Selon la configuration du doseur 3, ce dernier est autonome et n'utilise pas la communication radio, ou ne l'utilise que dans un seul sens de transmission de données, ou dans les deux sens.

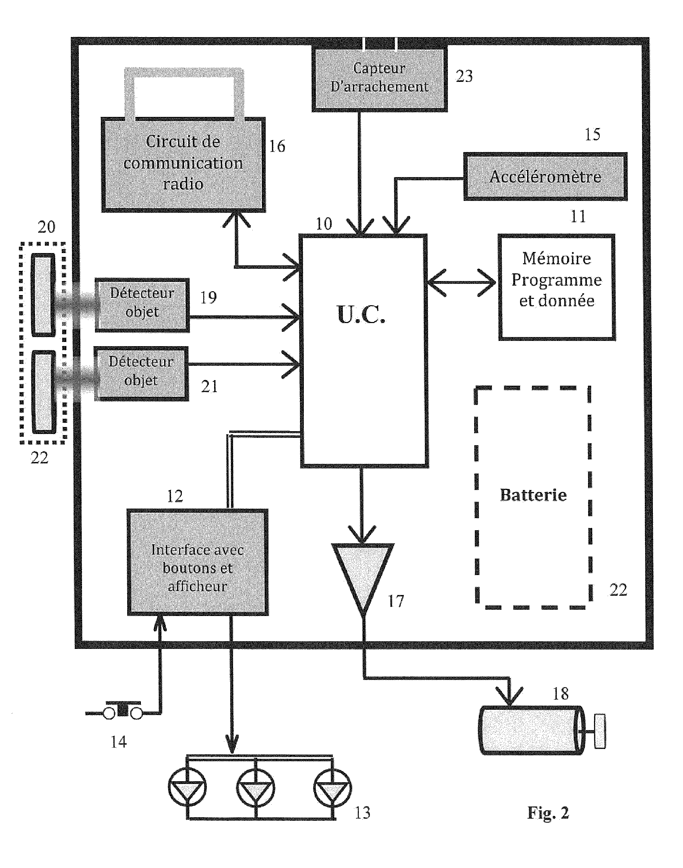

La **Fig. 2** présente un synoptique des équipements équipant un doseur 3. Ce doseur comporte au moins une carte électronique supportant des composants et reliée à des éléments électriques. Une unité centrale 10 communique avec une mémoire de donnée 11 non volatile. L'unité centrale communique avec une interface utilisateur 12 reliée à une pluralité de voyants lumineux 13, typiquement des diodes LED bicolores, et à au moins un bouton poussoir 14. L'opérateur du doseur 3 peut ainsi introduire des commandes de fonctionnement du doseur et peut contrôler le bon fonctionnement de l'objet. La carte électronique du doseur comporte un accéléromètre 15 qui détecte tout mouvement selon l'un quelconque des axes d'un repère orthonormé tridimensionnel, et un module de communication radio 16 équipé notamment d'amplificateurs et d'une antenne. Selon un mode particulier de réalisation, l'unité centrale 10 intègre le protocole de communication appelé « ZigBee » qui est connu en soi et le module de communication 16 émet dans la gamme de 0.5 à 2.5 Gigahertz. Le protocole et le module 16 permettent la communication bidirectionnelle avec le serveur local 4 et le terminal dédié 5. La carte électronique dispose également d'un amplificateur de signaux 17 destinés à commander le servo moteur 18 de la pompe, ce servo moteur est avantageusement de type asynchrone.

Selon un perfectionnement, la carte électronique du doseur comporte également au moins un détecteur 19 de présence d'un objet 20 particulier à proximité immédiate. Selon un exemple préféré, la carte électronique dispose d'un second détecteur 21 de présence d'un second objet 22. Ces objets peuvent être exemple être des aimants, et le détecteur 19 et/ou 21 peut être basé sur l'effet Hall. L'un et/ou l'autre de ces objets peuvent également être une puce RF_ID communiquant par une liaison à très courte distance avec le détecteur 19. Ces objets sont détenus par une personne habilitée à effectuer certaines taches sur le doseur, comme par exemple son étalonnage ou sa réinitialisation. En approchant l'objet du doseur 3, celui-ci détecte sa présence et commute dans un mode de supervision commandant notamment : le nettoyage, la réinitialisation du doseur et l'étalonnage des différentes quantités de liquide à verser. Selon une variante de réalisation et dans le cas d'un doseur ayant deux détecteurs 19 et 21, trois objets sont associés à ce doseur, l'un active le détecteur 19, l'autre le détecteur 21, et le troisième les deux détecteurs 19 et 21 (ce dernier étant représenté par la forme en pointillé de la **Fig.2****).**

Selon un autre perfectionnement, la carte électronique du doseur dispose d'un capteur d'arrachement 21 qui détecte que le doseur n'est plus solidarisé avec le goulot de la bouteille. Ce capteur peut être deux simples électrodes présentes sur la face extérieure du doseur et normalement recouvertes par un adhésif conducteur, cet adhésif solidarisant le doseur sur le goulot. Si l'adhésif est arraché, le contact entre les électrodes ne s'établit plus.

Une pile ou une batterie 22 alimente l'ensemble des composants électroniques de la carte du doseur. Selon une variante, le doseur dispose d'un connecteur pour recharger la batterie, une certaine configuration de couleur émise par les voyants lumineux 13 indique que la batterie n'est plus qu'à un faible pourcentage de sa charge, 10 % par exemple.

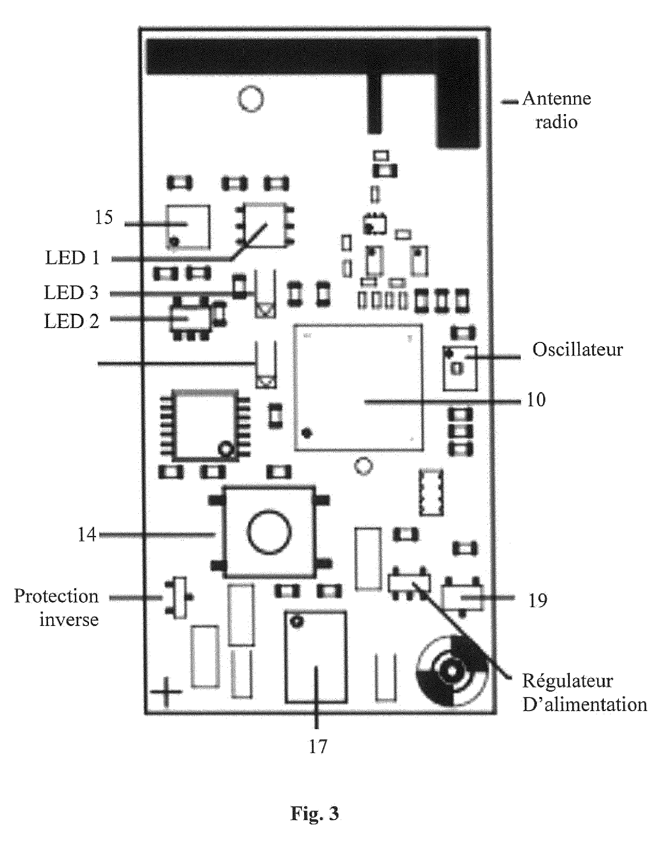

La **Fig. 3** présente la carte électronique développée pour un prototype de doseur selon un exemple de réalisation de l'invention. Pour ce prototype, l'unité centrale est un microcontrôleur référencé MC13213 comprenant entre autre un processeur, 32 Kilo-octets de mémoire Flash, des ports d'entrée/sortie, un générateur de PWM, une interface ZIGBEE, des entrées analogiques transmettant les signaux à des convertisseurs analogiques/numériques. L'accéléromètre numérique est un MMA8451Q. Les valeurs d'accélérations selon les trois axes orthogonaux x, y et z sont converties en valeur numériques de 14 bits et transmises par un port I²C. Le module radio permettant de communiquer sans contact est un circuit UPG2012TK. La mémoire externe est une mémoire EEPROM de 128 octets référencée 24AA01.

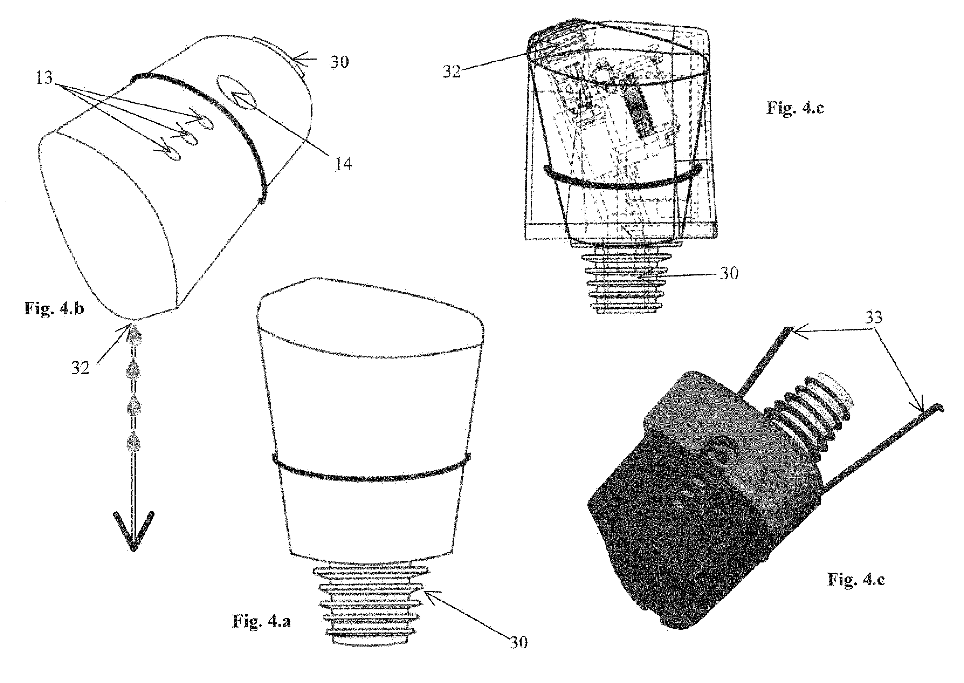

Les **Fig. 4** présentent l'aspect visuel du doseur monté. La **Fig. 4****.a** présente le doseur en position verticale, la partie inférieure se termine par un bouchon entouré d'une superposition de lamelles circulaire souples. Lors de l'introduction du bouchon dans le goulot, les lamelles viennent se plaquer dans la face intérieure du goulot et ainsi solidarisent le doseur avec la bouteille. L'intérieur du bouchon 30 contient au moins deux conduits dont l'un permet l'écoulement du liquide et l'autre l'injection de l'air. La **Fig. 4****.b** montre le doseur en position de versement, le culot de la bouteille se trouvant dans cette position plus haute que le goulot. Sur cette figure, les trois voyants lumineux 13 et le bouton poussoir se distinguent parfaitement. La **Fig. 4****.c** présente le bouton de profil et par transparence, la disposition de la carte électronique et des composants mécaniques. Le bouchon 30 comporte deux conduits s'introduisant dans la goulot de la bouteille, l'un pour l'écoulement du liquide et l'autre pour l'injection de l'air. La **Fig. 4****.d** présente en perspective le doseur en mettant en évidence un dispositif mécanique de témoin d'arrachement. Le doseur comporte deux tiges se terminant par des crochets qui prolongent les faces opposées du doseur dans la direction du goulot. Une fois solidarisé, un opérateur entoure les tiges à l'aide d'un lien qui vient les plaquer contre le goulot de la bouteille. La désolidarisation du doseur entraîne la coupure du lien et de ce fait, il est possible de constater cette situation qui peut laisser supposer que le liquide de la bouteille s'est écoulé sans faire appel au doseur et donc sans son contrôle. Selon une variante, le doseur peut détecter une désolidarisation non autorisée de façon électronique à l'aide du capteur 21.

Après avoir détaillé les différents éléments de l'invention, nous allons maintenant expliquer comment ceux-ci coopèrent.

Selon un premier mode de réalisation de l'invention, le versement du liquide s'effectue lorsqu'un opérateur prend la bouteille et la bascule en orientant le goulot vers le bas. Cette position est détectée par l'accéléromètre 15, et l'unité centrale 10 déclenche la rotation du servo moteur 18 pendant une durée proportionnelle à la quantité de liquide à verser. La temporisation est réalisée de préférence par logiciel. L'expérience montre que la densité et la viscosité du liquide n'influencent quasiment pas la quantité de liquide écoulée par unité de temps, qui est mesurée à 2 centilitres par seconde avec le prototype réalisé.

Le doseur 3 peut fonctionner selon au moins trois modes d'utilisation :
I - Autonome (pas de liaison radio en fonction),
II - avec liaison radio unidirectionnelle où le doseur envoie des données au terminal dédié,
III - avec liaison radio bidirectionnelle où le doseur envoie des données à mémoriser et reçoit des commandes de fonctionnement en provenance du terminal.

Dans le mode d'utilisation I, l'opérateur appuie sur le bouton 14 du doseur et allume successivement l'une des trois diodes LED, la première correspond à une quantité de 4 cl, la seconde une quantité de 10 cl et la troisième une quantité de 15 cl. (ces quantités ne sont indiquées qu'à titre d'exemples de réalisation). Puis, l'opérateur bascule la bouteille et place son goulot au-dessus du récipient à remplir, un verre par exemple. Le doseur 3 détecte le mouvement de basculement de la bouteille et laisse s'écouler le liquide au cours de la durée associée à la diode allumée. Pendant toute la durée où l'écoulement s'effectue, le voyant lumineux clignote. Une fois la durée écoulée, le doseur stoppe le versement, le voyant lumineux s'éteint et l'opérateur peut relever la bouteille.

Dans le mode d'utilisation II, la fonction décrite pour le mode d'utilisation I reste opérationnelle et le module radio 16 est en fonction. Lors de chaque versement de liquide, le doseur 3 émet un message vers le terminal dédié 5, via le serveur local 4. De cette manière, le terminal dédié peut contrôler la quantité écoulée de liquide pour chaque bouteille et peut aussi émettre une facture correspondant à la quantité et à la nature du liquide écoulé.

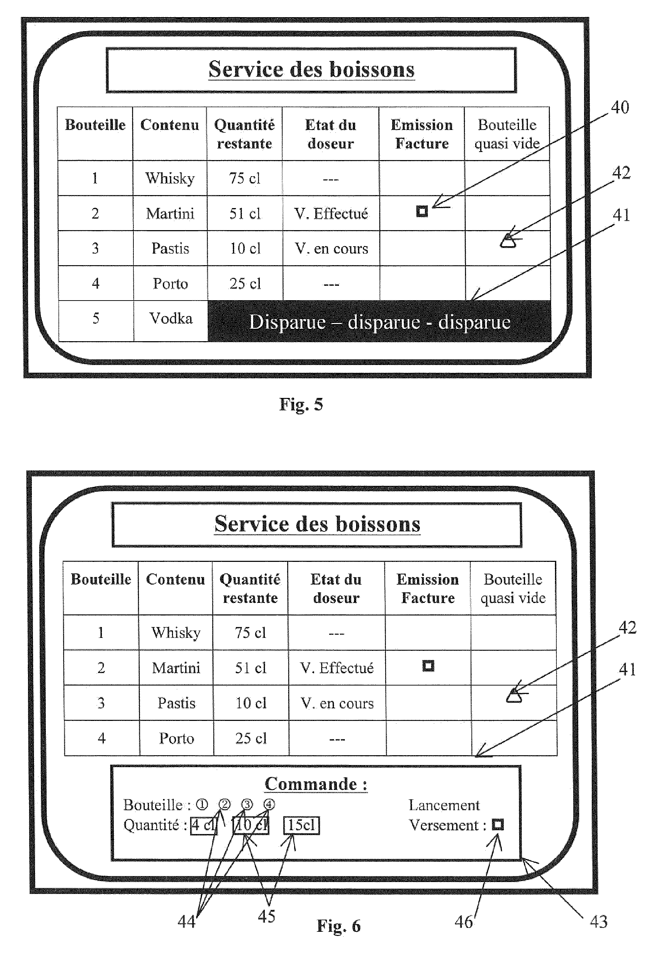

Le terminal dédié 5 affiche l'exemple d'apparence affiché sur l'écran 7 illustrée par la **Fig. 5****.** Sur ce menu, on peut voir un tableau associant pour chaque bouteille une référence, la nature du liquide qu'elle contient, la quantité restante dans la bouteille, l'état du doseur, le déclenchement de l'impression d'une facture et une éventuelle alarme indiquant un niveau bas de liquide dans la bouteille. Vis à vis du terminal, le doseur 3 d'une bouteille peut être dans un de ces quatre états :
- inactif, la bouteille est bien là et n'est pas utilisée,
- un versement de liquide vient de s'effectuer, la facture peut être imprimée. L'opérateur clique alors sur l'icône 40 déclenchant l'impression. Le terminal imprime la facture qui sera présentée au consommateur. Le doseur de cette bouteille a arrêté l'écoulement.
- un versement de liquide est en cours,
- la liaison radio avec le doseur est interrompue, ce qui peut signifier que le doseur est en panne ou que le doseur et sa bouteille ne sont plus dans l'établissement (dans ce dernier cas, on peut suspecter le vol de cette bouteille). Dans tous les cas, un message d'alarme 41 apparaît sur l'écran pour attirer l'attention des opérateurs, ce message est avantageusement doublé d'une alarme sonore.

Selon un perfectionnement, un message d'alarme 42 s'affiche à coté de la bouteille dont le niveau de liquide est en-dessous d'un ratio déterminé, 15 % par exemple. Ce message est destiné à attirer l'attention d'un opérateur et à l'inciter à changer la bouteille rapidement.

Si le perfectionnement consistant à disposer un capteur d'arrachement 21 dans le doseur est mis en oeuvre, alors la détection d'un arrachement déclenche l'émission d'un message vers le terminal qui affiche alors un message d'alarme associé à la bouteille et au doseur concernés.

Dans le mode d'utilisation III, les fonctions décrites pour les modes d'utilisation I et II restent opérationnelles et le module radio transmet des données dans les deux sens. L'opérateur programme la boisson à servir en utilisant l'écran dont un exemple d'apparence est illustré par la **Fig. 6****.** La fenêtre 43 permet à l'opérateur de choisir sa bouteille en sélectionnant une icône parmi une pluralité d'icones 44, de sélectionner la quantité de liquide à verser en sélectionnant une icône parmi une pluralité d'icones 45 et de déverrouiller l'écoulement en sélectionnant une icône spécifique. Une fois cette autorisation lancée, le terminal émet par radio vers le doseur concerné un signal de déverrouillage qui contient également la quantité de liquide à verser. Le doseur concerné fait alors clignoter le voyant lumineux 13 correspondant à la quantité de liquide programmée. Cet indicateur visuel permet à l'opérateur de repérer rapidement la bouteille concernée, il peut ainsi la prendre et déclencher le versement en la basculant. Le voyant lumineux 13 reste allumé en fixe et le doseur déclenche l'écoulement de la quantité programmée en commandant le servo moteur 18. A la fin, le doseur stoppe l'écoulement, éteint le voyant lumineux, et avertit le terminal 5 du versement effectué. Le menu sur l'écran est alors mis à jour et l'opérateur peut lancer l'impression de la facture.

Les trois modes qui viennent d'être décrits concernent l'utilisation du doseur 3. Selon un mode préféré de réalisation, le doseur commute dans l'un ou l'autres des modes de supervision en approchant l'objet 20 et/ou l'objet 22 (ou un même objet qui contient le moyen d'activer ensemble les deux détecteurs 19 et 21. Si aucun objet n'est présent, le doseur 3 est en mode utilisation, si l'un et/ou l'autre des objets est présent, il se trouve dans l'un des trois modes de supervision suivant :
- étalonnage du doseur, réinitialisation, recherche réseau radio local, retour aux paramètres d'usine, ...
- nettoyage du doseur,
- fonction manager.

Avantageusement, la couleur des voyants lumineux indique le mode de supervision dans lequel le doseur se trouve. Selon un perfectionnement, l'accès à l'une ou à l'autre des modes de supervision peut aussi s'effectuer par un menu spécifique s'affichant sur l'écran 7, éventuellement soumis à la présentation d'un code d'accès.

En approchant uniquement l'objet 20, par exemple une bague de couleur rouge, le doseur 3 peut être étalonné. La fonction d'étalonnage consiste d'abord à sélectionner une quantité déterminée de liquide en appuyant sur le bouton 14 pour faire clignoter le voyant lumineux 13 que l'on veut associer à cette quantité. Puis, l'opérateur dispose un verre doseur sous la bouteille et déclenche ensuite l'écoulement en appuyant continuellement sur le bouton. Lorsque la quantité mesurée par le verre doseur est atteinte, alors l'opérateur relâche le bouton. La durée d'appui sur le bouton est mesurée par l'unité centrale 10 et est mémorisée dans la mémoire 11 en tant que durée d'écoulement associée à ce voyant lumineux.

Selon un perfectionnement, d'autres fonctions sont accessibles dans ce mode de supervision. La fonction réinitialisation consiste principalement à effacer toute programmation, à remettre les paramètres d'usine, à pratiquer un autotest des différents composants du doseur, et à placer le doseur dans le mode d'utilisation I, ou II ou III. La fonction de recherche de réseau local permet d'associer chaque doseur 3 avec le terminal dédié 5 et de lui affecter un identifiant (typiquement c'est le nom du liquide dans la bouteille).

En approchant uniquement l'objet 22, par exemple une bague de couleur verte, un opérateur peut nettoyer le doseur. Le voyant vert est alors allumé. Le nettoyage consiste à laisser s'écouler indéfiniment du liquide de nettoyage jusqu'à ce que l'objet 22 soit éloigné.

En approchant les deux objets 20 et 22, qui peuvent être contenus dans une bague couleur noire, la fonction manager est accessible. Ce mode de supervision qui fait allumer en bleu les voyants 13, permet de n'utiliser la bouteille qu'à condition que l'opérateur possède le bon objet rendant actifs les détecteurs 19 et 21. Le fait de devoir présenter ou non un objet pour autoriser ou non l'écoulement peut avantageusement se programmer lorsque le doseur est en mode de supervision étalonnage du doseur. Si la fonction manager n'est pas sélectionnée, alors l'écoulement est déclenché par le simple basculement de la bouteille sans avoir à approcher un quelconque objet.

L'invention n'est pas limitée aux modes de réalisation qui viennent d'être décrits. En particulier, l'invention peut être mise en oeuvre par tout appareil doseur destiné à laisser s'écouler une certaine quantité de liquide d'un récipient lorsque celui-ci est basculé.

## Revendications

1. Dispositif (3) de dosage d'une quantité de liquide écoulée d'un récipient présentant une ouverture orientée vers le haut lorsque le récipient est posé, le dispositif étant solidarisé à ladite ouverture du récipient et comportant un moyen de contrôle (10) de l'écoulement d'une quantité de liquide déterminée lorsque l'ouverture du récipient est orientée vers le bas, le dispositif comportant en outre un capteur de positionnement (15) détectant le changement de position du récipient et déclenchant l'écoulement de la quantité déterminée de liquide lorsque l'ouverture du récipient est orientée vers le bas,
**caractérisé en ce que** le dispositif comporte un premier temporisateur, le moyen de contrôle comportant un moyen de libération de l'écoulement pendant un temps proportionnel à la quantité de liquide déterminée, ledit moyen de contrôle disposant d'un mode d'apprentissage consistant à utiliser le temporisateur pour comptabiliser le temps d'écoulement de liquide s'écoulant dans un contenant représentant une quantité déterminée, et un mode utilisation où le moyen de contrôle (10) libère l'écoulement pendant le temps ainsi comptabilisé lorsque la quantité déterminée de liquide est demandée.

2. Dispositif de dosage selon la revendication 1, **caractérisé en ce que** le premier temporisateur comporte une pluralité de durée correspondant chacune à une quantité déterminée de liquide à écouler.

3. Dispositif de dosage selon l'une quelconque des revendications précédentes, **caractérisé en ce qu'**il comporte un moyen de communication (16) avec une caisse enregistreuse (5), ledit moyen de communication émettant un premier signal lorsque ledit capteur de positionnement (15) détecte un changement de position du récipient.

4. Dispositif de dosage selon l'une quelconque des revendications précédentes, **caractérisé en ce qu'**il comporte un moyen de détection de l'arrachement d'un moyen de solidarisation du dispositif sur le récipient, la détection de l'arrachement du moyen déclenchant l'émission d'un signal.

5. Dispositif de dosage selon l'une quelconque des revendications précédentes, **caractérisé en ce que** ledit capteur de positionnement (15) déclenche la mise en mode veille d'au moins le moyen de contrôle lorsque ledit capteur détecte une absence de mouvement pendant une durée déterminée.

6. Système de distribution (3,5) d'une quantité de liquide déterminé extraite à partir d'un récipient présentant une ouverture orientée vers le haut lorsque le récipient est posé, le système comprenant un dispositif (3) solidarisé à ladite ouverture du récipient et une caisse enregistreuse (5) communiquant à travers un réseau avec ledit dispositif et apte à recevoir des commandes, ledit dispositif comportant un moyen de contrôle de la quantité de liquide déterminé s'écoulant de l'ouverture lorsque celle-ci est orientée vers le bas, le dispositif comportant un capteur de positionnement détectant le changement de position du récipient et déclenchant l'écoulement de la quantité déterminée de liquide lorsque l'ouverture du récipient est orientée vers le bas, le dispositif comportant en outre un moyen de communication émettant une donnée représentative de la durée d'écoulement de liquide, la caisse enregistreuse contrôlant que la quantité de liquide écoulée correspond à la commande introduite,
**caractérisé en ce que** le dispositif comporte un premier temporisateur, le moyen de contrôle comportant un moyen de libération de l'écoulement pendant un temps proportionnel à la quantité de liquide déterminée, ledit moyen de contrôle disposant d'un mode d'apprentissage consistant à utiliser le temporisateur pour comptabiliser le temps d'écoulement de liquide s'écoulant dans un contenant représentant une quantité déterminée, et un mode utilisation où le moyen de contrôle (10) libère l'écoulement pendant le temps ainsi comptabilisé lorsque la quantité déterminée de liquide est demandée.

7. Système de distribution selon la revendication 5, **caractérisé en ce que** la caisse enregistreuse comporte un moyen de comptabilisation des quantités de liquide écoulées par un dispositif, un moyen de comparaison du cumul de liquide écoulé avec un seuil correspondant à une partie du volume du récipient associé à ce dispositif, et un moyen d'émission d'une alarme lorsque le cumul est supérieur au seuil.

8. Système de distribution selon la revendication 6 ou 7, **caractérisé en ce que** le moyen de communication du dispositif émet périodiquement un signal de présence vers la caisse enregistreuse, la caisse enregistreuse comprenant un moyen d'émission d'un signal d'alarme activé lorsque ledit signal de présence n'est plus détecté au niveau de la caisse enregistreuse (5).
